(19) Europäisches Patentamt
European Patent Office
Office européen des brevets

(11) **EP 1 483 877 B1**

(12) **FASCICULE DE BREVET EUROPEEN**

(45) Date de publication et mention de la délivrance du brevet:
**19.05.2010 Bulletin 2010/20**

(51) Int Cl.:
*H04L 29/06* *(2006.01)*

(21) Numéro de dépôt: **03727574.0**

(22) Date de dépôt: **06.03.2003**

(86) Numéro de dépôt international:
**PCT/FR2003/000721**

(87) Numéro de publication internationale:
**WO 2003/077500 (18.09.2003 Gazette 2003/38)**

(54) **PROTOCOLE D INSCRIPTION, D INVALIDATION ET/OU D EFFACEMENT DE DROITS D ACCES A DES INFORMATIONS EMBROUILLEES ET MODULE DE CONTROLE D ACCES CORRESPONDANT**

PROTOKOLL ZUM ANMELDEN, ENTFERNEN UND/ODER LÖSCHEN DER ZUGRIFFSRECHTE AUF VERSCHLÜSSELTE INFROMATIONEN UND ENTSPRECHENDES ZUGRIFFSKONTROLLMODUL

PROTOCOL FOR ENTERING, DISABLING AND/OR ERASING SCRAMBLED DATA ACCESS RIGHTS AND THE CORRESPONDING ACCESS CONTROL MODULE

(84) Etats contractants désignés:
**AT BE BG CH CY CZ DE DK EE ES FI FR GB GR HU IE IT LI LU MC NL PT RO SE SI SK TR**

(30) Priorité: **08.03.2002 FR 0202969**

(43) Date de publication de la demande:
**08.12.2004 Bulletin 2004/50**

(73) Titulaire: **Viaccess**
**92057 Paris La Defense (FR)**

(72) Inventeurs:
• **BECKER, Claudia**
**F-35000 Rennes (FR)**
• **CODET, André**
**F-35200 Rennes (FR)**
• **FEVRIER, Pierre**
**F-35250 Saint Sulpice la Forêt (FR)**
• **GUIONNET, Chantal**
**F-35510 Cesson Sevigne (FR)**

(74) Mandataire: **Fréchède, Michel et al**
**Cabinet Lavoix**
**2 place d'Estienne d'Orves**
**75441 Paris Cedex 09 (FR)**

(56) Documents cités:
**US-A- 5 748 732**

• **VAN SCHOONEVELD D: "Standardization of conditional access systems for digital pay television" PHILIPS JOURNAL OF RESEARCH, ELSEVIER, AMSTERDAM, NL, vol. 50, no. 1, 1996, pages 217-225, XP004008213 ISSN: 0165-5817**

## Description

Les protocoles d'inscription, d'invalidation et/ou d'effacement de droits d'accès à des informations embrouillées sont, à l'heure actuelle, d'une importance primordiale pour assurer une gestion des prestations de service la plus fluide et la plus souple possible dans le domaine du contrôle d'accès à des informations embrouillées.

Dans cette description, les termes "protocole" et "proccessus" sont considérés comme des synonymes.

C'est en particulier le cas dans le domaine de la télévision à péage, domaine dans lequel les services ou prestations de services proposés tendent à recouvrir les services et prestations les plus divers.

En particulier, dans le domaine précité, le renouvellement périodique des abonnements d'un abonné est effectué par l'ajout, inscription, d'une nouvelle information caractéristique de la prolongation ou du nouvel abonnement souscrit par l'abonné.

En raison du fait de l'indépendance de la gestion des droits d'accès souscrits et alloués à chaque abonné et du contrôle d'accès proprement dit, la gestion des droits d'accès étant effectuée par l'intermédiaire de messages de gestion, dits messages EMM, pouvant véhiculer les droits d'accès et le contrôle d'accès étant effectué par la diffusion de messages de contrôle d'accès, dits messages ECM, comprenant un mot de contrôle d'accès chiffré, jouant le rôle d'une clé de service et des critères d'accès, un tel renouvellement se traduit par l'inscription, dans la mémoire du processeur de sécurité associé au décodeur ou au module de contrôle d'accès, d'une nouvelle information.

Le module de contrôle d'accès étant, de manière habituelle, constitué par une carte à microprocesseur, du type carte bancaire, les ressources en mémoire de ce dernier sont nécessairement limitées.

Pour cette raison, le processus précité d'inscription de droits est assorti d'une fonction d'effacement des droits périmés. Cette dernière a toutefois pour seul but de libérer de l'espace mémoire dans le module de contrôle d'accès ou la carte, afin d'éviter, à terme, sa saturation.

Un tel processus d'inscription/effacement ne permet pas d'assurer, avec toute la souplesse et la sécurité nécessaires, une gestion fluide des droits d'accès inscrits dans le module de contrôle d'accès ou la carte alloué à chaque abonné.

C'est, par exemple, suite à un défaut de paiement de l'abonné, ou encore dans le cadre des offres modulables lors du changement, par l'abonné, de l'offre à laquelle ce dernier a souscrit.

Eu égard au critère de sécurité, en raison du caractère un peu fruste du processus actuel d'effacement, tout abonné indélicat apparaît en mesure de filtrer et intercepter les messages d'effacement qui auraient pour objet de réduire ou contrôler les droits d'accès de ce dernier.

En outre, un processus d'enregistrement des messages EMM d'inscription de droits en vue de soumettre ces derniers de manière illicite à un processus de re-jeu ne peut être exclu.

Enfin, les processus actuels d'inscription et/ou d'effacement de droits par messages EMM peuvent provoquer un dysfonctionnement de ces opérations, lié au non respect d'un séquencement adapté.

Un autre état de la technique est connu de l'article de D. VAN SCHOONEVELD, « Standardization of conditional access systems for digital pay television », Philips Journal of Research, Volume 50 (1996) 217-225, XP004008213.

La présente invention a pour objet la mise en oeuvre d'un protocole d'inscription, d'invalidation et/ou d'effacement de droits d'accès à des informations embrouillées permettant, d'une part, d'assurer un contrôle et une gestion des droits d'accès inscrits d'une très grande souplesse et d'une très grande fluidité, et, d'autre part, d'améliorer sensiblement le niveau de sécurité offert.

En particulier, un objet de la présente invention est la mise en oeuvre d'un protocole d'inscription, d'invalidation et/ou d'effacement de droits d'accès à des informations embrouillées, dans lequel chaque opération d'inscription d'invalidation et/ou d'effacement est rendue conditionnelle à une référence antérieure, telle qu'une date d'action.

Un autre objet de la présente invention est également la mise en oeuvre d'un protocole d'inscription, d'invalidation et/ou d'effacement de droits d'accès à des informations embrouillées dans lequel les opérations d'inscription, d'invalidation et/ou d'effacement de droit d'accès peuvent être codées, afin d'améliorer la sécurité et empêcher tout re-jeu des messages d'ordre interceptés correspondants.

Un autre objet de la présente invention est, enfin, la mise en oeuvre d'un module de contrôle d'accès permettant l'inscription, dans la mémoire programmable de ce dernier, de droits d'accès et de porte-jetons électroniques permettant la mise en oeuvre du protocole objet de la présente invention.

L'invention a donc pour objet un processus d'inscription, d'invalidation et/ou d'effacement de droits d'accès à des informations embrouillées conforme à la revendicaton 1.

L'invention a également pour objet un module de contrôle d'accès conforme à la revendication 14.

Le protocole et le module de contrôle d'accès, objets de la présente invention, trouvent application, non seulement à la transmission point-multipoint de données embrouillées, notamment à la télévision à péage, mais également à la transmission point à point de données d'images vidéo ou d'exécution de services, en réseau, selon le protocole IP par exemple.

Ils seront mieux compris à la lecture de la description et à l'observation des dessins ci-après, dans lesquels :

- la figure 1 représente, à titre illustratif, un organigramme général des étapes permettant la mise en oeuvre du protocole objet de la présente invention ;
- la figure 2a représente, à titre illustratif, un organigramme spécifique des étapes permettant la mise en oeuvre du protocole objet de la présente invention, lors d'une opération d'inscription d'un droit valide, dans le module de contrôle d'accès alloué à un abonné ;
- la figure 2b représente, à titre indicatif, un organigramme spécifique des étapes permettant la mise en oeuvre du protocole objet de la présente invention, lors d'une opération d'invalidation d'un droit inscrit dans le module de contrôle d'accès alloué à un abonné ;
- la figure 2c représente, à titre illustratif, un organigramme spécifique des étapes permettant la mise en oeuvre du protocole objet de la présente invention, lors d'une opération d'effacement d'un droit d'accès inscrit, l'opération d'effacement correspondant à un effacement virtuel, en raison du caractère momentanément différé de l'effacement physique de ce droit ;
- la figure 2d représente, à titre illustratif, un organigramme spécifique de l'introduction d'un effacement physique d'un droit d'accès inscrit, conditionnellement à un critère spécifique, tel qu'un critère temporel par exemple ;
- les figures 3a et 3b représentent un module de contrôle d'accès selon l'invention.

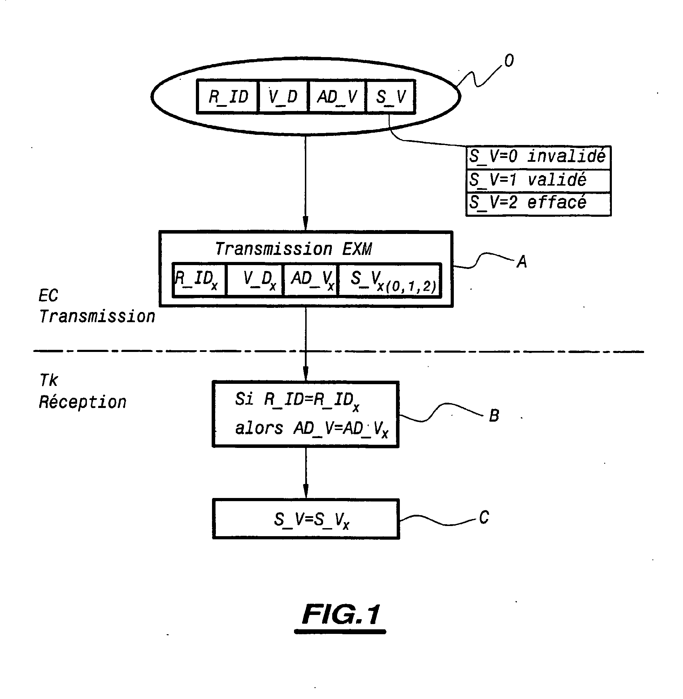

Une description plus détaillée du protocole d'inscription, d'invalidation et/ou d'effacement de droits d'accès à des informations embrouillées, conforme à l'objet de la présente invention, sera maintenant donnée en liaison avec la figure 1 et les figures suivantes.

D'une manière générale, on rappelle que le protocole, objet de la présente invention, permet de gérer les droits d'accès à des informations embrouillées transmises d'un centre d'émission vers une pluralité de terminaux de désembrouillage. A chaque terminal $T_k$ est associé un module de contrôle d'accès muni d'un processeur de sécurité.

De manière classique, chaque module de contrôle d'accès peut être constitué par une carte à microprocesseur contenant le processeur de sécurité précité, ainsi que des mémoires sécurisées permettant la mémorisation de clés de déchiffrement et, finalement, toute opération de vérification d'authenticité par exemple. Chaque module de contrôle d'accès est muni d'une mémoire non volatile programmable et des droits d'accès aux informations embrouillées sont inscrits dans le module de contrôle d'accès, au niveau de la mémoire non volatile programmable précitée.

Les informations embrouillées sont soumises à un contrôle d'accès par émission périodique de messages de contrôle d'accès, messages désignés messages ECM. Ces messages de contrôle d'accès sont porteurs de critères d'accès et d'un cryptogramme d'un mot de contrôle changé périodiquement et chiffré au moyen d'une clé d'exploitation.

Au niveau de chaque processeur de sécurité, conditionnellement à la vérification à la valeur vraie d'au moins un droit d'accès inscrit vis-à-vis des critères d'accès véhiculés par les messages de contrôle d'accès, le contrôle d'accès est effectué par déchiffrement du cryptogramme du mot de contrôle à partir de la clé d'exploitation, mémorisée dans la mémoire non volatile sécurisée du processeur de sécurité, par transmission au terminal de désembrouillage du mot de contrôle restitué par le module de contrôle d'accès, puis désembrouillage des informations embrouillées à partir du mot de contrôle restitué au niveau du terminal de désembrouillage précité.

Dans le cadre d'un processus de contrôle d'accès aux informations embrouillées précité, le protocole, objet de la présente invention, est remarquable en ce qu'il consiste au moins à constituer et définir tout droit d'accès inscrit dans le module de contrôle d'accès comme un ensemble de variables indépendantes et de variables liées. Ces variables comportent au moins, outre une variable d'identification du droit d'accès et une variable de dates de validité, une variable de date d'action sur le droit d'accès inscrit dans le module de contrôle d'accès et une variable d'état pouvant prendre l'une de trois valeurs codées, c'est-à-dire soit droit d'accès valide, soit droit d'accès invalidé ou encore droit d'accès effacé.

En référence à la figure 1 précitée, on désigne par :

- R_ID : variable d'identification de droit d'accès ;
- V_D : variable de dates de validité ;
- AD_V : variable de date d'action sur le droit d'accès inscrit ;
- S_V : variable d'état pouvant prendre l'une des trois valeurs codées, droit d'accès valide, droit d'accès invalidé ou droit d'accès effacé.

A titre d'exemple non limitatif, on indique que les trois valeurs codées peuvent correspondre à :

- S_V = 0 pour un droit invalidé ;
- S_V = 1 pour un droit valide ;
- S_V = 2 pour un droit effacé.

Compte tenu des considérations précédentes, on comprend, bien entendu, que la définition et la constitution des droits d'accès, ainsi que mentionné précédemment dans la description, sont essentielles pour la mise en oeuvre du protocole objet de la présente invention. Cette étape est représentée à l'étape O de la figure 1 et chaque droit d'accès AR peut alors correspondre à la syntaxe ci-après :

$$AR = [V\_D] \; R\_ID \; [R\_SID] \; AD\_V \; S\_V \qquad\qquad (1)$$

En référence à la relation précitée, on indique que, conformément au codage spécifique des droits d'accès précités, toute variable entre crochets est considérée comme optionnelle.

Alors que la variable de dates de validité V_D est une variable indépendante, celle-ci peut être rendue optionnelle pour des raisons de codage spécifique, l'absence de variable de dates de validité, pour un droit d'accès inscrit, pouvant correspondre à une valeur particulière de ce droit par exemple.

Au contraire, la variable R_SID, variable de sous-identification de droit, est une variable liée à la variable d'identification de droit d'accès R_ID.

Dans ces conditions, on considère la présence des variables indépendantes d'identification de droit d'accès R_ID, de date d'action AD_V et de variable d'état S_V comme nécessaire pour la mise en oeuvre du protocole objet de la présente invention, ce dernier étant essentiellement mis en oeuvre pour des droits d'accès inscrits et comportant, bien que de manière optionnelle, une variable de date de validité.

Ainsi, en référence à la relation (1) précédente, on indique que pour ces variables :

- V_D : indique un intervalle de date de validité, lequel peut être fixe et représenté par une date de début et une date de fin de droit d'accès ou glissant et défini alors en nombre de jours, le cas échéant par une date de péremption. L'intervalle de validité peut alors être transformé en valeur fixe à la première utilisation par exemple.
- R_ID et R_SID : les variables précitées correspondent à des identifiants et sous identifiants du droit inscrit et permettent, bien entendu, de référencer ce droit dans les critères d'accès véhiculés par les messages de contrôle d'accès ECM.
- AD_V : indique la date à laquelle une opération a été effectuée sur le droit inscrit. D'une manière plus spécifique, on indique que la variable précitée indique soit la date d'inscription du droit inscrit dans la carte lorsque aucune opération n'a été effectuée sur ce dernier, soit au contraire, la date d'exécution, date d'action, de la dernière opération ultérieure et, en particulier, la date de réactualisation, la date d'invalidation ou encore la date d'effacement, ainsi qu'il sera décrit ultérieurement dans la description.
- S_V : indique la valeur codée de la variable d'état. En référence à la figure 1, on indique que cette variable codée peur prendre les valeurs 0, 1, 2 précédemment citées ou toute autre valeur explicite ou chiffrée par exemple.

En référence à la figure 1, on considère l'étape de constitution et de définition des droits d'accès, telle que mentionné précédemment, comme réalisée.

Suite à l'étape 0 précitée, le protocole, objet de la présente invention, consiste en une étape A, à transmettre, du centre d'émission vers chaque terminal de désembrouillage $T_k$ et, bien entendu, vers le module de contrôle d'accès associé à ce dernier, au moins un message de gestion de droits d'accès noté message EXM.

Ce message comporte, ainsi que représenté sur la figure 1, au moins une variable d'identification de droits d'accès inscrits, cette variable étant notée $R\_ID_x$, une variable de date d'action notée $AD\_V_x$, cette date d'action correspondant à la date d'émission du message de gestion, c'est-à-dire la date d'opération de gestion réalisée sur le droit d'accès inscrit dont la variable d'identification R_ID correspond à la variable d'identification $R\_ID_x$ contenue dans le message de gestion, ainsi qu'il sera explicité ci-après dans la description. Le message peut, en outre, comporter une variable de dates de validité, notée $V\_D_x$. Enfin, le message de gestion EXM comporte une variable d'affectation d'état notée $S\_V_x$ constituée par une valeur codée correspondant à un droit d'accès valide, un droit d'accès invalidé ou un droit d'accès effacé. La variable $S\_V_x$ peut donc prendre les valeurs 0, 1, 2, ainsi que mentionné précédemment dans la description.

Sur réception du message de gestion EXM au niveau du module de contrôle d'accès associé au terminal de désembrouillage, le protocole, objet de l'invention, consiste, en une étape B, à affecter au droit d'accès inscrit correspondant à la variable d'identification de droit d'accès du message de gestion de droits d'accès la date d'action, puis, en une étape C, à allouer à la variable d'état S_V du droit d'accès inscrit, la variable d'affectation d'état $S\_V_x$ correspondant à un droit d'accès valide, à un droit d'accès invalidé ou à un droit d'accès effacé.

En ce qui concerne la mise en oeuvre de l'étape B, on indique que cette étape peut être réalisée par la mise en oeuvre d'une commande de type logique If (Si) ... Then (Alors).

Dans ces conditions, l'étape B précitée, ainsi que représentée en figure 1, peut consister à comparer la valeur de la variable d'identification du droit d'accès inscrit R_ID à la variable d'identification de droits d'accès inscrits contenus dans le message de gestion EXM, c'est-à-dire à la variable $R\_ID_x$ par comparaison d'égalité. La comparaison d'égalité précitée peut comporter une pluralité de comparaisons successives portant sur les variables telles que variable de sous-identification du droit R_SID et variable de dates de validité, le cas échéant sur toute autre variable.

Lorsque cette égalité est vérifiée, alors, à la variable de date d'action AD_V est allouée, sous condition, la valeur de la variable de date d'action $AD\_V_x$ du message de gestion EXM. La condition précitée consiste à vérifier la postériorité de la variable $AD\_V_x$ par rapport à la variable AD_V. Puis, à la variable d'état du droit d'accès inscrit S_V est allouée la variable d'affectation d'état $S\_V_x$ contenue dans le message de gestion EXM. Cette opération est réalisée, à l'étape C, par instantiation de la variable d'état du droit d'accès inscrit S_V représentée par l'égalité :

$$S\_V = S\_V_X$$

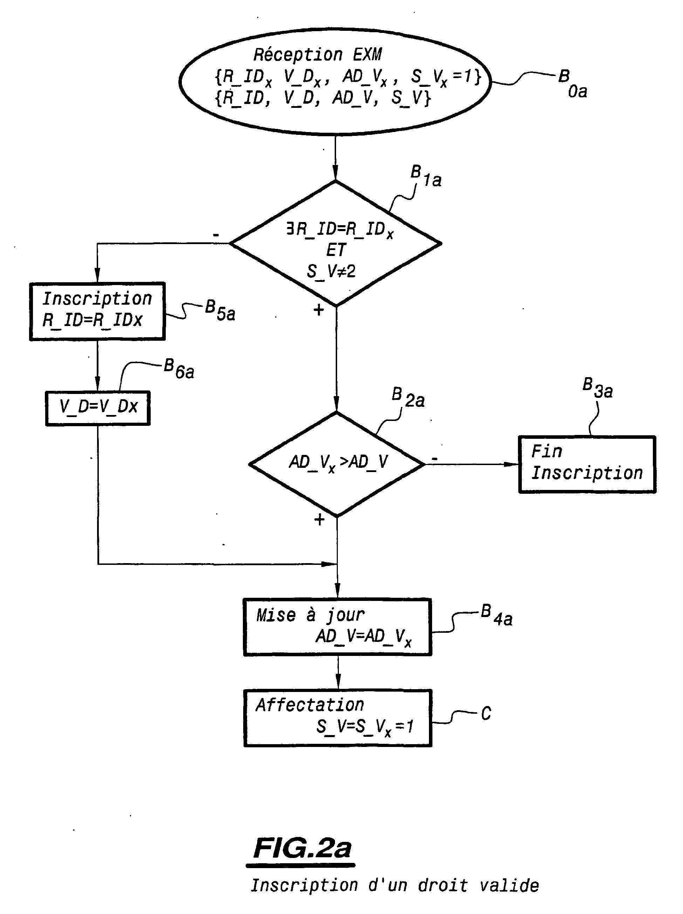

Une description plus détaillée de la mise en oeuvre du protocole objet de la présente invention, dans le cadre d'opérations d'inscription d'un droit valide, d'invalidation d'un droit puis d'effacement d'un droit inscrit, sera maintenant donnée en liaison avec les figures 2a à 2d.

Pour une opération d'inscription d'un droit d'accès déterminé dans un module de contrôle d'accès, la variable de date d'action $AD\_V_x$, dans le message EXM de gestion, correspond à une date d'inscription de ce droit d'accès et la variable d'affectation $S\_V_x$ est une valeur codée correspondant à un droit valide, c'est-à-dire à la valeur codée $S\_V_x = 1$.

L'opération d'inscription proprement dite du droit d'accès consiste à inscrire, dans le module de contrôle d'accès, et en particulier dans la mémoire non volatile de ce dernier, un droit d'accès déterminé dont la date d'action est celle de la date d'inscription précitée et dont la variable d'état est celle de la variable d'état $S\_V_x = 1$.

En référence à la figure 2a, l'opération d'inscription débute par la réception, au niveau du terminal de désembrouillage $T_k$ du message EXM, à l'étape $B_{0a}$.

On dispose, au niveau du module de contrôle d'accès, après démultiplexage du message EXM, des variables $R\_ID_x$, $V\_D_x$, $AD\_V_x$, $S\_V_x = 1$ issues du message EXM et des variables R_ID, V_D, AD_V, S_V du droit inscrit dans le module de contrôle d'accès, si ce dernier est effectivement inscrit.

Pour l'opération d'inscription précitée, le protocole objet de la présente invention peut consister, ainsi que représenté en figure 2a, à vérifier, en une étape $B_{1a}$, l'existence d'un droit inscrit correspondant. Ce test est noté :

$$\exists R\_ID = R\_ID_X.$$

Ce test est accompagné d'un test de non appartenance de ce droit à l'état effacé, $S\_V \neq 2$, afin de permettre l'exécution de l'opération d'inscription pour des droits existants à l'état invalidé ou à l'état inscrit, en vue d'une opération de réinscription pour ce qui concerne ces derniers. Le test mis en oeuvre à l'étape $B_{1a}$ vérifie la relation :

$$\exists R\_ID = R\_ID_X \text{ ET } S\_V \neq 2.$$

Sur réponse positive à l'étape $B_{1a}$, le protocole objet de l'invention peut consister à vérifier le caractère de postériorité de la variable de date d'action correspondant une date d'inscription vis-à-vis de la date d'action du droit d'accès correspondant. Cette opération peut être réalisée, à l'étape $B_{2a}$, par comparaison de supériorité de la date d'action et de la variable de date d'action $AD\_V_x$ contenue dans le message EXM vis-à-vis de la date d'action du droit inscrit AD_V.

Sur réponse négative au test de l'étape $B_{2a}$ précitée, l'opération d'inscription est terminée par une étape de fin d'inscription $B_{3a}$, l'opération d'inscription du droit n'étant pas effective.

Au contraire, sur réponse positive au test de l'étape $B_{2a}$, cette dernière est alors suivie d'une étape $B_{4a}$ consistant à effectuer une mise à jour de la variable de date d'action du droit d'accès correspondant à partir de la date d'action correspondant à une date d'inscription.

Cette opération est représentée par la relation :

$$AD\_V = AD\_V_X$$

L'étape $B_{4a}$ de mise à jour est alors suivie de l'étape C d'affectation consistant à affecter, à la variable d'état du droit d'accès identique S_V, la valeur codée correspondant à un droit valide, soit $S\_V_x = 1$. Le droit d'accès inscrit préalablement dans le module de contrôle d'accès est alors renouvelé ou réactualisé.

Le protocole objet de la présente invention pour une opération d'inscription peut, bien entendu, être mis en oeuvre pour l'exécution d'une première inscription d'un droit dans un module de contrôle d'accès.

Dans une telle situation, il n'existe pas de droit inscrit correspondant à la variable d'identification de droit d'accès du message EXM, variable $R\_ID_x$, et la comparaison d'égalité de la relation du test réalisé à l'étape $B_{1a}$ n'est pas vérifiée.

En conséquence, sur réponse négative au test de l'étape précitée, réponse négative à la vérification de la relation 3 $R\_ID = R\_ID_x$ ET $S\_V \neq 2$, le protocole objet de l'invention consiste, en outre, à effectuer une mise à jour par première inscription de ce droit d'accès dont la date d'action correspond à la date d'inscription.

Cette opération est représentée, sur la figure 2a, par l'accès, sur réponse négative à l'étape $B_{1a}$, à l'étape de mise à jour $AD\_V = AD\_V_x$.

Cet accès peut être réalisé par affectation à la variable $R\_ID$ du droit dont l'inscription est effectuée, à l'étape $B_{5a}$, de la valeur $R\_ID_x$ contenue dans le message de gestion EXM, puis à l'étape $B_{6a}$, de la variable de dates de validité $V\_D_x$ à la variable de validité $V\_D$.

L'opération d'affectation, à l'étape C, correspond, dans ce cas, à une première inscription.

De même, en référence à la figure 2a, pour un droit d'accès inscrit dont la variable d'affectation d'état correspond à un droit effacé, mais toujours physiquement présent, $S\_V = 2$, celui-ci consiste également sur réponse négative au test $B_{1a}$, avantageusement, à effectuer une nouvelle inscription du droit, étapes $B_{5a}$, $B_{6a}$ et $B_{4a}$. A ce droit d'accès inscrit est alors affectée une variable d'état correspondant à un droit valide, étape C.

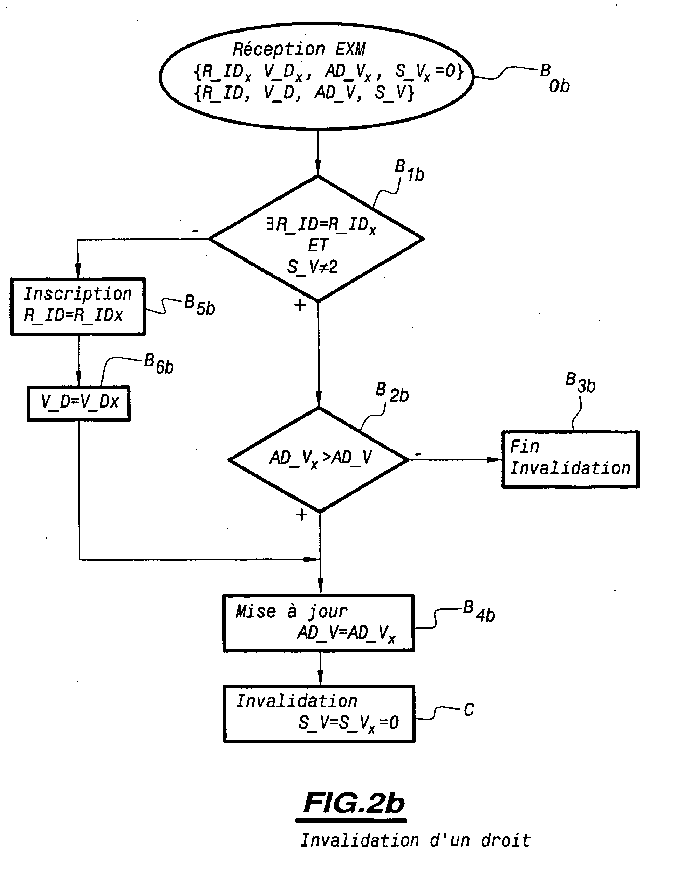

Une description plus détaillée d'une opération d'invalidation d'un droit d'accès inscrit dans un module de contrôle d'accès conforme au protocole objet de la présente invention sera maintenant décrite en liaison avec la figure 2b.

Dans une telle situation, la variable de date d'action du message de gestion de droits d'accès correspond à une date d'invalidation et la variable d'affectation d'état $S\_V_x$ est la valeur codée correspondant à un droit invalidé, c'est-à-dire la valeur zéro dans l'exemple donné précédemment dans la description.

Dans ces conditions, l'opération d'invalidation du droit inscrit dans le module de contrôle d'accès consiste à affecter, à la variable d'état du droit d'accès inscrit $S\_V$, la valeur codée correspondant à un droit d'accès invalidé, c'est-à-dire la valeur codée $S\_V_x = 0$ et, bien entendu, à mettre à jour la date d'action du droit d'accès inscrit à partir de la date d'invalidation.

Dans ce but, ainsi que représenté en figure 2b, l'opération d'invalidation débute par une étape de réception du message EXM de gestion relative à cette opération au niveau du terminal de désembrouillage $T_k$.

Lors de cette étape, référencée $B_{0b}$ sur la figure 2b, on dispose des variables d'identification de droit d'accès $R\_ID_x$, de dates de validité $V\_D_x$, de date d'action $AD\_V_x$ et de variable d'affectation d'état $S\_V_x = 0$ contenues dans le message EXM, ainsi que des variables d'identification de droit $R\_ID$, de date de validité $V\_D$, de date d'action $AD\_V$ et de variable d'état $S\_V$ du droit inscrit dans le module de contrôle d'accès.

Dans ces conditions, le protocole objet de la présente invention peut consister, ainsi que représenté en figure 2b, préalablement à l'opération d'invalidation proprement dite, à vérifier, en une étape $B_{1b}$, au niveau du module de contrôle d'accès, l'existence d'un droit d'accès inscrit correspondant. Le test $B_{1b}$ est semblable au test $B_{1a}$ de la figure 1a.

En outre, et de manière non limitative, cette opération de test peut consister à vérifier, de même que dans le test $B_{1a}$ de la figure 1a, que le droit d'accès inscrit correspondant est un droit d'accès valide ou invalide sur lequel l'opération d'invalidation doit être effectuée.

Pour cette raison, le test réalisé à l'étape $B_{1b}$ vérifie la relation :

$$\exists R\_ID = R\_ID_X \text{ ET } S\_V \neq 2.$$

Sur réponse positive à l'étape $B_{1b}$, cette dernière peut alors être suivie d'une étape $B_{2b}$ consistant à vérifier le caractère de postériorité de la variable de date d'action correspondant à une date d'invalidation vis-à-vis de la variable de date d'action du droit inscrit. Cette opération est réalisée, à l'étape de test $B_{2b}$ selon la relation :

$$AD\_V_X > AD\_V.$$

Sur réponse négative au test $B_{2b}$ précité, ainsi que représenté en figure 2b, un appel d'une étape de fin d'invalidation $B_{3b}$ peut être effectué, une telle opération permettant d'introduire une sécurité sur l'opération d'invalidation proprement dite.

Au contraire, sur réponse positive au test réalisé à l'étape $B_{2b}$, une étape de mise à jour de la date d'action est réalisée à l'étape $B_{4b}$, cette opération de mise à jour vérifiant la même relation que l'étape de mise à jour lors de l'inscription d'un droit valide $B_{4a}$ à la figure 2a.

L'étape $B_{4b}$ est alors suivie de l'étape C d'invalidation proprement dite consistant à affecter, à la variable d'état du droit d'accès inscrit S_V, la valeur codée correspondant à un droit invalidé $S\_V_x = 0$.

En référence à la figure 2b, le protocole objet de la présente invention peut en outre être mis en oeuvre pour l'invalidation d'un droit d'accès effacé toujours présent sur le module de contrôle d'accès, S_V = 2. Dans un tel cas, il consiste, sur réponse négative à l'étape $B_{1b}$ précitée, à effectuer la mise à jour de l'étape $B_{4b}$ puis l'invalidation à l'étape C, $S\_V = S\_V_x = 0$. De même que dans le cas de la figure 2a, l'étape $B_{4b}$ peut alors être mise en oeuvre suite à une étape $B_{5b}$ et une étape $B_{6b}$ analogues aux étapes $B_{5a}$ respectivement $B_{6a}$ de la figure 2a.

Dans les situations précitées, le protocole objet de l'invention consiste à effectuer une mise à jour du droit d'accès par inscription d'un droit d'accès dont la date d'action correspond à une date d'invalidation. A ce droit d'accès inscrit est affectée une variable d'état correspondant à un droit d'accès invalidé.

Les opérations précitées permettent de positionner respectivement inscrire un droit à l'état invalidé pour empêcher son inscription ultérieure au moyen d'un message dont la date d'action serait antérieure.

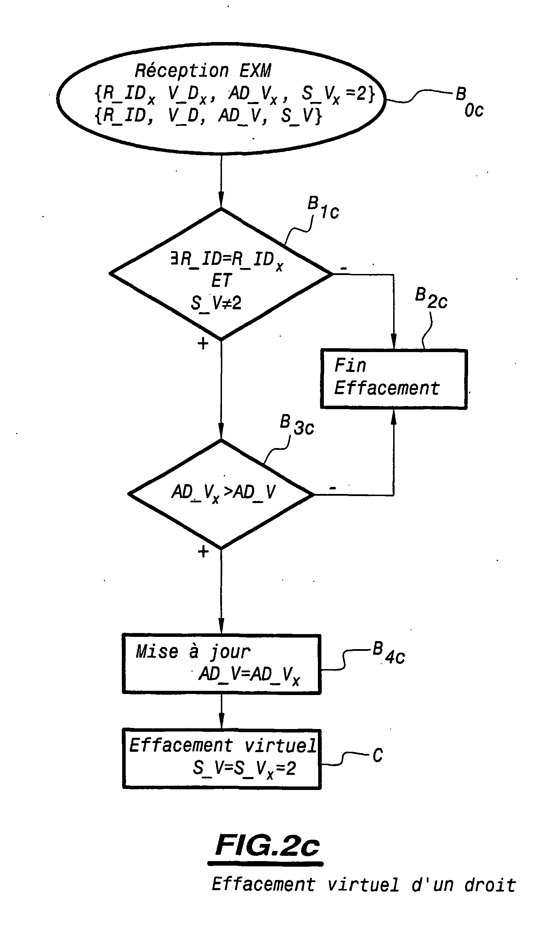

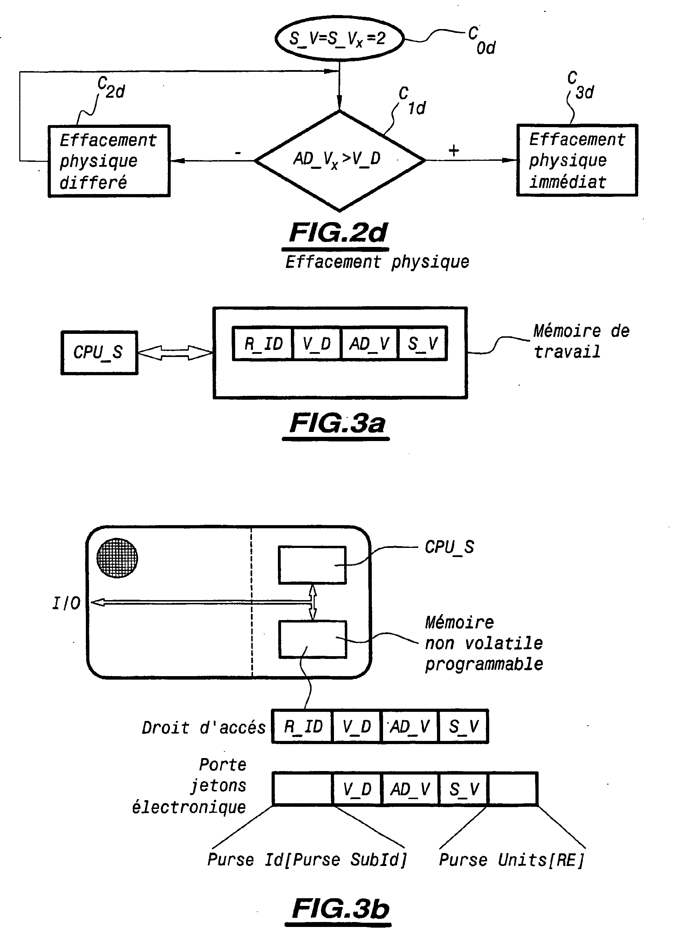

Une description plus détaillée d'une opération d'effacement d'un droit d'accès inscrit, mise en oeuvre conformément au protocole objet de la présente invention, sera maintenant donnée en liaison avec les figures 2c et 2d.

Une opération d'effacement d'un droit d'accès inscrit est, dans ces conditions, réalisée à partir d'un message EXM pour lequel la variable d'affectation d'état $S\_V_x = 2$ correspond à un droit d'accès effacé.

Dans ces conditions, ainsi que représenté en figure 2c, l'opération d'effacement débute, au niveau d'un terminal de désembrouillage $T_k$, par la réception d'un message EXM et l'on dispose des variables précédemment décrites dans la description, pour les opérations d'inscription ou d'invalidation, avec toutefois la variable d'affectation d'état $S\_V_x = 2$.

L'opération d'effacement est effectuée pour un droit d'accès dans le module de contrôle d'accès dont la variable d'état correspond à un droit valide ou à un droit invalidé.

Dans ces conditions, l'étape de réception du message EXM, $B_{0c}$, est suivie d'une étape de test $B_{1c}$ consistant à vérifier l'existence au niveau du module de contrôle d'accès d'un droit d'accès inscrit correspondant. Le test $B_{1c}$ précité est semblable au test $B_{1a}$ ou $B_{1b}$ des figures 2a ou 2b et vérifie la même relation. Sur réponse négative au test de l'étape $B_{1c}$, une étape $B_{2c}$ de fin d'effacement est appelée. Sur réponse positive au test $B_{1c}$, ce dernier est suivi d'une étape $B_{3c}$ de vérification de postériorité de la variable de date d'action du message de gestion $AD\_V_x$, vis-à-vis de la variable de date d'action du droit inscrit AD_V. Cette étape est réalisée par comparaison de supériorité selon la relation :

$$AD\_V_X > AD\_V.$$

Sur réponse négative au test $B_{3c}$ précité, le retour à l'appel de l'étape de fin d'effacement $B_{2c}$ peut être réalisé dans des conditions semblables à celles de la fin d'invalidation d'un droit décrit en relation avec la figure 2b.

Au contraire, sur réponse positive au test de l'étape $B_{3c}$, l'opération d'effacement, selon le protocole objet de la présente invention, peut consister en l'appel d'une étape de mise à jour de la date d'action du droit inscrit, à l'étape $B_{4c}$, selon la relation :

$$AD\_V = AD\_V_X.$$

L'étape de mise à jour précitée est alors suivie de l'étape d'effacement proprement dit, à l'étape C, pour réaliser un effacement virtuel du droit d'accès inscrit.

Selon une mise en oeuvre particulièrement avantageuse du protocole objet de la présente invention, l'étape d'effacement virtuel consiste en une allocation, à la variable d'état du droit d'inscrit S_V, de la variable d'affectation d'état du message de gestion S_V correspondant à un droit d'accès effacé, c'est-à-dire $S\_V_X = 2$.

La notion d'effacement virtuel recouvre en fait la notion de maintien de l'existence physique du droit d'accès inscrit sur la mémoire non volatile du module d'accès, alors que, toutefois, ce droit est rendu inutilisable par la seule affectation de la valeur codée correspondant à un droit d'accès effacé.

Selon un mode de mise en oeuvre particulièrement avantageux du protocole objet de la présente invention, l'état d'effacement virtuel d'un droit d'accès inscrit peut correspondre à une absence de possibilité d'utilisation totale de ce droit, bien que ce dernier soit maintenu présent physiquement sur la mémoire non volatile du module de contrôle d'accès comportant ce dernier. L'opération d'effacement proprement dite, c'est-à-dire d'effacement physique de tout droit d'accès inscrit peut être réalisée ensuite de manière systématique, indépendamment du contrôle d'accès et de l'accès de l'abonné aux informations embrouillées correspondant au droit d'accès considéré.

En particulier, ainsi que représenté en figure 2d, l'effacement physique du droit d'accès soumis préalablement à un état d'effacement virtuel peut être soit immédiat, soit différé.

Le cas échéant, l'exécution de l'étape d'effacement physique peut être conditionnée à un critère spécifique, tel qu'un critère temporel, ainsi qu'il sera décrit de manière plus détaillée en liaison avec la figure 2d.

En référence à la figure précitée, on considère un droit d'accès inscrit en état d'effacement virtuel, suite à la mise en oeuvre du protocole objet de la présente invention, conformément au mode de réalisation illustré et décrit précédemment dans la description, en liaison avec la figure 2c.

Dans cette situation, un message EXM, avec $S\_V_x = 2$, a été reçu et la situation d'effacement virtuel correspond à la relation précédemment décrite dans la description $S\_V = S\_V_x = 2$. L'état correspondant d'effacement virtuel est représenté par l'état $C_{0d}$ sur la figure 2d.

L'exécution de l'effacement physique proprement dit du droit inscrit peut alors être soumise à un test tel qu'un test temporel, à l'étape $C_{1d}$.

Le test précité peut, à titre d'exemple non limitatif, consister à comparer la variable de date d'action du message EXM, c'est-à-dire la variable $AD\_V_x$, par comparaison de supériorité, à la variable de date de fin de validité V_D du droit inscrit.

Sur réponse positive au test $C_{1d}$, la date d'action d'effacement étant postérieure à la date de validité du droit inscrit, l'effacement physique est réalisé de manière immédiate par appel d'une étape correspondante $C_{3d}$.

Au contraire, sur réponse négative au test $C_{1d}$, la date d'action d'effacement étant antérieure à la date de fin de validité V_D du droit inscrit, une étape d'effacement physique différé est appelée $C_{2d}$. L'effacement est différé tant que la date d'action $AD\_V_x$ de tous messages d'effacement EXM successifs est inférieure ou égale à la date de fin de validité du droit inscrit. Le maintien de l'effacement physique différé est symbolisé par le retour au test $C_{1d}$.

On comprend que, grâce à la mise en oeuvre de l'effacement différé précité, il est possible d'assurer une gestion systématique de l'effacement physique des droits d'accès inscrits alors que ces derniers, bien que toujours physiquement présents sur la carte, sont inutilisables par l'abonné dont le droit inscrit correspondant a été placé en situation d'effacement virtuel.

Un exemple comparatif de mise en oeuvre d'effacement ou suppression de droit, conformément à l'art antérieur, respectivement conformément au protocole objet de la présente invention, sera maintenant donné ci-après dans la description dans le cas où l'on considère, pour un abonné considéré, l'absence de présence du module de contrôle d'accès, c'est-à-dire de la carte allouée à ce dernier dans le terminal de désembrouillage ou décodeur ou, le cas échéant, l'absence de fonctionnement du décodeur pendant une période de temps déterminée vis-à-vis de l'émission cyclique de messages de gestion, messages EMM dans le cas de l'art antérieur, messages EXM conformément au protocole objet de la présente invention.

On considère ainsi la diffusion cyclique de messages de gestion de type EMM dans le cas des processus de l'art antérieur et de type EXM lors de la mise en oeuvre du protocole objet de la présente invention.

On considère, suivant le tableau 1 relatif au processus de l'art antérieur, l'émission d'un cycle de messages de gestion de type EMM selon un premier cycle, tel que représenté au tableau, alors que pendant les dates d'action correspondantes, selon les cellules de la zone A du tableau du cycle 1, le module de contrôle d'accès ou le terminal de désembrouillage sont hors service.

## Tableau 1

| | Type de messages | Date de l'action | Action sur la carte | |
|---|---|---|---|---|
| Cycle 1 | .../... EMM d'inscription R_ID$_1$ | 01/12/01 | Antérieure au 01/12/01 Droit inscrit R_ID$_1$ | A |
| | EMM de suppression R_ID$_1$ | 02/12/01 | Droit effacé R_ID$_1$ | |
| | EMM d'inscription R_ID$_2$ | 12/12/01 | Droit inscrit R_ID$_2$ | |
| | EMM d'inscription R_ID$_3$ | 13/12/01 | | |
| | EMM d'inscription R_ID$_4$ | 12/12/01 | | |
| | EMM .../... | .../... | | |
| Cycle 2 | EMM d'inscription R_ID$_5$ | 31/12/01 | Droit inscrit R_ID$_5$ | |
| | EMM de suppression de droit R_ID$_5$ | 01/01/02 | Droit effacé R_ID$_5$ | |
| | EMM d'inscription R_ID$_6$ | 12/01/02 | Droit inscrit R_ID$_6$ | |
| | EMM .../... | | | |
| n Cycle 1 | EMM d'inscription R_ID$_1$ | 01/12/01 | Droit inscrit R_ID$_1$ | B |
| | EMM de suppression R_ID$_1$ | 02/12/01 | Droit effacé R_ID$_1$ | |
| | EMM d'inscription R_ID$_2$ | 12/12/01 | Droit déjà inscrit | |
| | EMM d'inscription R_ID$_3$ | 13/12/01 | Droit inscrit R_ID$_3$ | |
| | EMM d'inscription R_ID$_4$ | 12/12/01 | Droit inscrit R_ID$_4$ | |
| | EMM .../... | | | |

Dans le tableau 1 précité, on rappelle que la date de l'action désigne la date d'émission du message, mais que ce message ne comporte toutefois aucune date d'action, contrairement aux messages EXM permettant la mise en oeuvre du protocole objet de la présente invention.

Le cycle 1 est suivi d'un cycle 2 à des dates différentes, puis, ensuite, d'une pluralité de cycles 1, l'un des cycles étant désigné par n cycle 1.

Lors de la diffusion du premier cycle 1, toute opération d'inscription de droit ou de suppression de droit, c'est-à-dire d'effacement, est réalisée sauf, bien entendu, en ce qui concerne les cellules de la zone A dans lesquelles le module de contrôle d'accès, c'est-à-dire la carte et/ou le terminal de désembrouillage, sont hors service.

Lors de l'émission d'un cycle 2, différent du cycle 1, en ce qui concerne la variable d'identification des droits d'accès inscrits, le module de contrôle d'accès et/ou le terminal étant en service, les opérations correspondantes sont, de la même façon, exécutées.

Au contraire, lors de la répétition du cycle 1, c'est-à-dire dans le tableau 1, pour les cellules du cycle notées n cycle 1, il apparaît des cellules correspondant à une zone B, cette zone indiquant que le droit diffusé R_ID$_1$ successivement inscrit et effacé ne peut pas être effectivement établi en tant que tel dans le module de contrôle d'accès, c'est-à-dire dans la carte, car aucun contrôle par date d'action n'est effectué.

Alors que le processus de l'art antérieur ne permet pas de contrôler la non réinscription de droits effacés, le tableau 2, relatif à la mise en oeuvre du protocole objet de la présente invention, dans une situation analogue, permet de réduire les cas dans lesquels les messages de gestion EXM introduisent des dysfonctionnements dans les conditions ci-après.

## Tableau 2

| | Type de messages | Date de l'action | Etat du droit dans la carte | |
|---|---|---|---|---|
| Cycle 1 | .../... EXM d'inscription R_ID$_1$ | 01/12/01 | Droit inscrit | I |
| | EXM d'invalidation R_ID$_1$ | 02/12/01 | Invalidé | |
| | EXM d'inscription R_ID$_2$ | 12/12/01 | Droit inscrit | |
| | EXM d'inscription R_ID$_3$ | 13/12/01 | | A |
| | EXM d'inscription R_ID$_4$ | 12/12/01 | | |
| | EXM d'invalidation de droit R_ID$_4$ | 13/12/01 | | |
| | EXM .../... | .../... | | |
| Cycle 2 | EXM d'inscription R_ID$_5$ | 31/12/01 | Droit inscrit | I |
| | EXM d'invalidation de droit R_ID5 | 01/01/02 | Invalidé | |
| | EXM d'inscription R_ID$_6$ | 12/01/02 | Droit inscrit | |
| | EXM .../... | | | |
| n Cycle 1 | EXM d'inscription R_ID$_1$ | 01/12/01 | Message ignoré | i |
| | EXM d'invalidation R-ID$_1$ | 02/12/01 | Message ignoré | |
| | EXM d'inscription R_ID$_2$ | 12/12/01 | Message ignoré | |
| | EXM d'inscription R_ID$_3$ | 13/12/01 | Droit inscrit | |
| | EXM d'inscription R_ID$_4$ | 12/12/01 | Droit inscrit | |
| | EXM d'invalidation de droit R_ID$_4$ | 13/12/01 | Invalidé | I |
| | EXM .../... | .../... | | |

Dans ces conditions, les règles de traitement dans le module de contrôle d'accès sont les suivantes :

- lors d'une invalidation, marquage du droit comme invalidé I ;
- un droit invalidé ne peut être réactivé que de manière conditionnelle :

- si la date d'action, c'est-à-dire la variable de date d'action du message EXM est inférieure ou égale à la date d'action du droit inscrit, l'action du message est ignorée dans la carte i ;
- si la date de l'action du message EXM est supérieure à la date d'action d'un droit inscrit, le droit inscrit est réactualisé, c'est-à-dire effectivement réactualisé invalidé ou effacé.

Dans le tableau 2, de même que dans le tableau 1, la zone A correspond à un temps d'arrêt ou de dysfonctionnement du module de contrôle d'accès et/ou du terminal de désembrouillage pour le cycle 1.

- Les zones I indiquent que le droit inscrit a été invalidé grâce au message d'invalidation, c'est-à-dire $S\_V = S\_V_x = 0$ ;
- les cellules de la zone i font référence à la situation selon laquelle, si la date d'action du message EXM est inférieure ou égale à la date d'action du droit inscrit même invalidé, l'action correspondante est ignorée dans le module de contrôle d'accès.

On constate ainsi l'existence d'un traitement et d'une gestion plus souples et plus fluides de l'ensemble des droits d'accès inscrits dans les modules de contrôle d'accès.

Pour la mise en oeuvre du protocole objet de la présente invention, il est nécessaire de disposer, bien entendu, d'un terminal de désembrouillage associé à un module de contrôle d'accès aux informations embrouillées transmises d'un centre d'émission vers le terminal de désembrouillage précité.

Ainsi que représenté en figure 3a, on indique que le module de contrôle d'accès associé au terminal de désembrouillage correspondant comprend, inscrit en mémoire de ce module de contrôle d'accès, au moins un droit d'accès constitué par un ensemble de variables indépendantes et de variables liées, cet ensemble comportant au moins, outre une variable d'identification R_ID du droit inscrit, une variable de date d'action sur le droit d'accès inscrit AD_V et une variable d'état pouvant prendre l'une des trois valeurs codées mentionnées précédemment dans la description pour représenter un droit d'accès valide, un droit d'accès invalidé ou encore un droit d'accès effacé. Le module de contrôle d'accès peut, en outre, comporter une variable de dates de validité, V_D.

D'une manière générale, on indique que le module de contrôle d'accès peut être constitué par un élément logiciel ou par un élément matériel et, en particulier, par une carte virtuelle pour réaliser l'élément logiciel précité ou par une carte à microprocesseur munie du processeur de sécurité, ainsi que mentionné précédemment dans la description.

Lorsque le module de contrôle d'accès est un élément logiciel, celui-ci peut être implanté au niveau du terminal de désembrouillage, par exemple. Dans ce cas, ainsi que représenté en figure 3a, le droit d'accès constitué par l'ensemble des variables indépendantes et variables liées précité peut alors être mémorisé sur une mémoire permanente telle qu'un disque dur par exemple, non représenté aux dessins, et chargé systématiquement dans la mémoire de travail du terminal de désembrouillage, la mémoire de travail étant, bien entendu, connectée au processeur de sécurité CPU_S du terminal de désembrouillage.

Lorsque au contraire, le module de contrôle d'accès est constitué par une carte à microprocesseur munie d'un processeur de sécurité, ainsi que représenté en figure 3b, cette carte à microprocesseur est également munie d'une mémoire programmable non volatile sécurisée associée au processeur de sécurité. Dans un tel cas, ainsi que représenté en figure 3b précitée, les droits d'accès constitués par un ensemble de variables indépendantes et de variables liées sont inscrits dans la mémoire programmable non volatile sécurisée.

On comprend, en particulier que, grâce à une liaison par bus vers les circuits d'entrée/sortie notée I/O de la carte, l'échange d'instructions venant du terminal de désembrouillage pour assurer soit l'inscription d'un droit d'accès, soit l'invalidation d'un droit d'accès, soit au contraire, l'effacement d'un droit d'accès dans la mémoire non volatile programmable, peut être réalisé par les circuits d'entrée/sortie I/O précités sous le contrôle du processeur de sécurité CPU_S précédemment mentionné.

Enfin, en référence à la même figure 3b, et dans le cas plus particulier d'un service de contrôle d'accès à des informations embrouillées, l'accès à ces informations étant accordé à titre onéreux, tel que par exemple dans le cas d'un service de télévision à péage, la notion de droit d'accès constitué par un ensemble de variables indépendantes et de variables liées et définissant les modes d'accès aux informations embrouillées, recouvre les porte-jetons électroniques alloués à l'utilisateur abonné détenteur du module de contrôle d'accès.

Pour cette raison, sur la figure 3b, on a représenté un porte-jetons électronique codé de manière semblable à celle d'un droit d'accès AR, le porte-jetons électronique pouvant comporter, de la même manière à titre d'exemple :

- une variable d'identification de porte-jetons électronique notée Purse Id ;
- une variable de dates de validité V_D ;
- une variable de date d'action sur le porte-jetons électronique AD_V ;
- une variable d'état S_V.

Enfin, une variable d'unités de compte peut être prévue, notée Purse Units.

On indique que la variable d'identification de porte-jetons électronique peut être associée à une variable liée notée Purse SubId, cette variable, selon les conventions de notation précédentes relatives au droit d'accès AR étant, par exemple, une variable optionnelle.

Dans ces conditions, on comprend que, pour un porte-jetons électronique donné, référencé Purse Id, il est possible de définir des sous-porte-jetons, définis chacun par la variable Purse SubId, pour des applications spécifiques et des services particuliers.

Il en est de même en ce qui concerne la variable d'unités de compte Purse Units, à laquelle peut être associée une variable liée optionnelle RE, selon les mêmes conventions. La variable liée RE peut désigner une variable dite de report permettant le report du contenu du porte-jetons électronique considéré ou du solde créditeur de ce dernier sur un porte-jetons électronique de même nature ou sur le même porte-monnaie ou porte-jetons électronique comportant un identifiant identique.

Dans ces conditions, et de même que dans le cas des droits d'accès AR, la syntaxe de codage des porte-jetons électroniques, de manière semblable à celle des droits d'accès AR, est de la forme :

PU = Purse Id [Purse SubId] V_D AD_V S_V Purse Units [RE].

**Revendications**

1. Processus d'inscription, d'invalidation/effacement de droits d'accès à des informations embrouillées transmises d'un centre d'émission vers au moins un terminal de désembrouillage auquel est associé un module de contrôle d'accès muni d'un processeur de sécurité, ces droits d'accès étant inscrits dans ledit module de contrôle d'accès, lesdites informations embrouillées étant soumises à un contrôle d'accès par émission périodique de messages de contrôle d'accès, porteurs de critères d'accès et d'un cryptogramme d'un mot de contrôle changé périodiquement et chiffré au moyen d'une clé d'exploitation, puis, au niveau de chaque processeur de sécurité, conditionnellement à la vérification à la valeur vraie d'au moins un droit d'accès inscrit vis-à-vis desdits critères d'accès, par déchiffrement du cryptogramme du mot de contrôle à partir de ladite clé d'exploitation, transmission au terminal de désembrouillage du mot de contrôle restitué et désembrouillage desdites informations embrouillées à partir dudit mot de contrôle restitué, **caractérisé en ce qu'**il consiste au moins :

   - à constituer tout droit d'accès inscrit dans ledit module de contrôle d'accès comme un ensemble de variables indépendantes et de variables liées comportant au moins, outre une variable d'identification du droit d'accès, une variable de date d'action sur le droit d'accès inscrit et une variable d'état pouvant prendre l'une de trois valeurs codées droit d'accès valide, droit d'accès invalidé, droit d'accès effacé ;
   - à transmettre dudit centre d'émission vers chaque terminal de désembrouillage et vers le module de contrôle d'accès associé à ce dernier au moins un message de gestion de droit d'accès, ledit message comportant au moins, outre une variable d'identification de droit d'accès inscrit, une variable de date d'action et une variable d'affectation d'état, valeur codée correspondant à un droit d'accès valide, un droit d'accès invalidé ou un droit d'accès effacé ; et sur réception dudit message de gestion de droit d'accès, au niveau dudit module de contrôle d'accès,
   - à affecter au droit d'accès inscrit correspondant à la variable d'identification de droit d'accès dudit message de gestion de droit d'accès la dite date d'action, et
   - à allouer à ladite variable d'état dudit droit d'accès inscrit correspondant ladite variable d'affectation d'état correspondant à un droit d'accès valide, à un droit d'accès invalidé ou à un droit d'accès effacé.

2. Processus selon la revendication 1, **caractérisé en ce que**, pour une opération d'inscription d'un droit d'accès déterminé dans un module de contrôle d'accès, ladite variable de date d'action dudit message de gestion de droit d'accès correspond à une date d'inscription, et la variable d'affectation d'état est une valeur codée correspondant à un droit valide, l'opération d'inscription consistant à inscrire, dans ledit module de contrôle d'accès, un droit d'accès déterminé dont la date d'action est celle de ladite date d'inscription et dont la variable d'état est celle de ladite variable d'état et correspond à un droit valide.

3. Processus selon la revendication 2, **caractérisé en ce que**, préalablement à l'opération d'inscription proprement dite dudit droit d'accès déterminé, celui-ci consiste en outre, au niveau dudit module de contrôle d'accès,

   - à vérifier l'existence, au niveau dudit module de contrôle d'accès, d'un droit d'accès inscrit correspondant audit droit d'accès déterminé et dont la variable d'état correspond à la valeur codée droit valide ou droit invalidé, et sur réponse positive à ladite vérification :
   - à vérifier le caractère de postériorité de ladite variable de date d'action correspondant à une date d'inscription vis-à-vis de la date d'action dudit droit d'accès identique et sur réponse positive à ladite vérification de caractère de postériorité,
   - à effectuer une mise à jour de ladite variable de date d'action dudit droit d'accès identique, à partir de ladite date d'action correspondant à une date d'inscription,
- à affecter, à ladite variable d'état dudit droit d'accès identique, la valeur codée correspondant à un droit valide, ce qui permet de valider ledit droit d'accès inscrit.

**4.** Processus selon la revendication 2 ou 3, **caractérisé en ce que**, sur réponse négative à ladite vérification d'existence d'un droit d'accès identique, celui-ci consiste en outre à effectuer une mise à jour par première inscription de ce droit d'accès, dont la date d'action correspond à la date d'inscription.

**5.** Processus selon la revendication 1, **caractérisé en ce que**, pour une opération d'invalidation d'un droit d'accès inscrit dans un module de contrôle d'accès, ladite variable de date d'action dudit message de gestion de droit d'accès correspond à une date d'invalidation et la variable d'affectation d'état est une valeur codée correspondant à un droit invalidé, l'opération d'invalidation consistant à affecter, à ladite variable d'état dudit droit d'accès inscrit, ladite valeur codée correspondant à un droit invalidé et à mettre à jour ladite date d'action dudit droit d'accès inscrit à partir de ladite date d'invalidation.

**6.** Processus selon la revendication 5, **caractérisé en ce que**, préalablement à l'opération d'invalidation proprement dite, celui-ci consiste :

- à vérifier l'existence, au niveau dudit module de contrôle d'accès, d'un droit d'accès inscrit correspondant audit droit d'accès dudit message de gestion ;
- à vérifier le caractère de postériorité de ladite variable de date d'action correspondant à une date d'invalidation vis-à-vis de ladite variable de date d'action dudit droit inscrit.

**7.** Processus selon l'une des revendications précédentes, **caractérisé en ce que**, pour toute variable d'affectation d'état du message de gestion correspondant à un droit d'accès effacé et pour tout droit d'accès inscrit dans le module de contrôle d'accès dont la variable d'état correspond à un droit valide ou à un droit invalidé, celui-ci consiste au moins :

- en une mise à jour de la date d'action dudit droit inscrit ;
- en une allocation, à ladite variable d'état dudit droit d'accès inscrit, de ladite variable d'affectation d'état du message de gestion correspondant à un droit d'accès effacé, ladite opération d'allocation constituant, pour ledit droit d'accès inscrit, une opération d'effacement virtuel.

**8.** Processus selon la revendication 7, **caractérisé en ce que** les étapes de mise à jour et d'effacement virtuel dudit droit d'accès inscrit sont précédées d'une étape de vérification de l'existence, au niveau dudit module de contrôle d'accès, d'un droit d'accès inscrit correspondant audit droit d'accès dudit message de gestion, et d'une étape de vérification de postériorité de ladite variable de date d'action dudit message de gestion vis-à-vis de ladite variable de date d'action dudit droit d'accès inscrit.

**9.** Processus selon l'une des revendications 7 ou 8, **caractérisé en ce que** ladite opération d'effacement virtuel est suivie d'une opération d'effacement physique dudit droit d'accès.

**10.** Processus selon la revendication 9, **caractérisé en ce que** ladite opération d'effacement physique est immédiate ou différée.

**11.** Processus selon l'une des revendications 2 ou 3, **caractérisé en ce que**, pour un droit d'accès inscrit dont la variable d'affectation d'état correspond à un droit d'accès effacé, celui-ci consiste en outre à effectuer une mise à jour par première inscription de ce droit d'accès, audit droit d'accès étant affectée une variable d'état correspondant à un droit valide et dont la date d'action correspond à la date d'inscription.

**12.** Processus selon l'une des revendications 5 ou 6, **caractérisé en ce que**, pour un droit d'accès inscrit dont la variable d'affectation d'état correspond à un droit d'accès effacé, celui-ci consiste en outre à effectuer une mise à jour par première inscription de ce droit d'accès, audit droit d'accès étant affectée une variable d'état correspondant à un droit invalidé et dont la date d'action correspond à la date d'inscription.

**13.** Processus selon l'une des revendications 5 ou 6, **caractérisé en ce que**, sur réponse négative à ladite vérification d'existence d'un droit d'accès correspondant, celui-ci consiste en outre à effectuer une mise à jour par première inscription de ce droit d'accès, dont la date d'action correspond à une date d'invalidation, audit droit d'accès étant affectée une variable d'état correspondant à un droit invalidé.

14. Module de contrôle d'accès destiné à la mise en oeuvre du processus de l'une quelconque des revendications précédentes, ce module de contrôle d'accès étant muni d'un processeur de sécurité dans lequel sont inscrits les droits d'accès aux informations embrouillées, le processeur de sécurité étant apte à déchiffrer le cryptogramme du mot de contrôle à partir de la clé d'exploitation, et le module de contrôle d'accès étant apte à transmettre au terminal de désembrouillage le mot de contrôle restitué pour que les informations embrouillées à partir du mot de contrôle restitué puissent être désembrouillés, **caractérisé en ce qu'**il comprend, inscrit en mémoire de ce module de contrôle d'accès, au moins un droit d'accès constitué par un ensemble de variables indépendantes et de variables liées, comportant au moins, outre une variable d'identification du droit d'accès inscrit et une variable de dates de validité, une variable de date d'action sur le droit d'accès inscrit et une variable d'état pouvant prendre l'une de trois valeurs codées, droit d'accès valide, droit d'accès invalidé, droit d'accès effacé.

15. Module de contrôle d'accès selon la revendication 14, **caractérisé en ce que** ledit module de contrôle d'accès étant constitué par une carte à microprocesseur munie d'un processeur de sécurité et d'une mémoire programmable non volatile sécurisée, ledit au moins un droit d'accès est inscrit dans ladite mémoire programmable non volatile sécurisée.

16. Module de contrôle d'accès selon la revendication 14 ou 15, **caractérisé en ce que**, pour un contrôle d'accès à des informations embrouillées d'un service de télévision à péage, lesdits droits d'accès recouvrent lesdits droits d'accès définissant les modes d'accès auxdites informations embrouillées et des porte-jetons électroniques alloués à l'utilisateur abonné, détenteur dudit module de contrôle d'accès.

**Claims**

1. Process of entering, invalidating/deleting rights of access to scrambled information transmitted from a broadcast transmitting station to at least one descrambling terminal, with which is associated an access control module provided with a safety processor, these access rights being entered in the said access control module, the said scrambled information being subjected to access control by periodic emission of access control messages, carrying access criteria and a cryptogram of a control word changed periodically and encrypted by means of an operating key, then, in each safety processor, conditionally on the verification at the true value of at least one access right entered with respect to the said access criteria, by decryption of the cryptogram of the control word, from the said operating key, transmission to the descrambling terminal of the restored control word and descrambling of the said scrambled information, from the said restored control word, **characterised in that** it comprises at least:

   - constituting any access right entered in the said access control module as a set of independent variables and of connected variables comprising at least, in addition to an access right identification variable, a variable of the date of action on the access right entered and a status variable capable of taking one of three values coded valid access right, invalidated access right and deleted access right,
   - transmitting, from the said broadcast transmitting station to each descrambling terminal and to the access control module associated with the latter, at least one access right management message, the said message comprising at least, in addition to a variable of identification of the access right entered, an action date variable and a status allotment variable, coded value corresponding to a valid access right, an invalidated access right or a deleted access right and, on receipt of the said access right management message, in the said access control module,
   - allotting, to the entered access right corresponding to the variable of identification of access right of the said access right management message, the said action date and
   - allocating, to the said variable of status of the said corresponding access right entered, the said status allotment variable corresponding to a valid access right, an invalidated access right or a deleted access right.

2. Process according to claim 1, **characterised in that**, for an operation of entry of a predetermined access right in an access control module, the said variable of the date of action of the said access right management message corresponds to a date of entry and the status allotment variable is a coded value corresponding to a valid right, the entry operation consisting of entering, in the said access control module, a predetermined access right, the action date of which is that of the said entry date and the status variable of which is that of the said status variable and corresponds to a valid right.

3. Process according to claim 2, **characterised in that**, prior to the operation of entry, proper, of the said predetermined access right, the latter comprises, in addition, in the said access control module,

- verifying the existence, in the said access control module, of an entered access right corresponding to the said predetermined access right and the status variable of which corresponds to the value coded valid right or invalidated right and on positive response to the said verification:
- verifying the later nature of the said variable of the action date corresponding to an entry date with respect to the action date of the said identical access right and on positive response to the said verification of the later nature,
- carrying out an update of the said action date variable of the said identical access right, with effect from the said action date corresponding to an entry date and
- allotting, to the said status variable of the said identical access right, the coded value corresponding to a valid right, with which it is possible to validate the said access right entered.

4. Process according to claim 2 or 3, **characterised in that**, on a negative response to the said verification of existence of an identical access right, the latter also comprises carrying out an update at the time of the first entry of this access right, the action date of which corresponds to the entry date.

5. Process according to claim 1, **characterised in that**, for an operation of invalidation of an access right entered in an access control module, the said action date variable of the said access right management message corresponds to an invalidation date and the status allotment variable is a coded value corresponding to an invalidated right, the invalidation operation consisting of allotting, to the said status variable of the said access right entered, the said coded value corresponding to an invalidated right and updating the said action date of the said access right entered with effect from the said invalidation date.

6. Process according to claim 5, **characterised in that**, prior to the operation of invalidation proper, the latter comprises:

- verifying the existence, in the said access control module, of an entered access right corresponding to the said access right of the said management message and
- verifying the later nature of the said action date variable corresponding to an invalidation date with respect to the said action date variable of the said right entered.

7. Process according to any one of the preceding claims, **characterised in that**, for any variable of allotment of status of the management message corresponding to a deleted access right and for any access right entered in the access control module of which the status variable corresponds to a valid right or to an invalidated right, the latter comprises at least:

- an update of the action date of the said right entered and
- an allocation, to the said status variable of the said access right entered, of the said variable of allotment of status of the management message corresponding to a deleted access right, the said allocation operation constituting, for the said access right entered, a virtual deletion operation.

8. Process according to claim 7, **characterised in that** the stages of updating and virtual deletion of the said access right entered are preceded by a stage of verification of the existence, in the said access control module, of an entered access right corresponding to the said access right of the said management message and by a stage of verification of the later nature of the said action date variable of the said management message with respect to the said action date variable of the said access right entered.

9. Process according to claim 7 or 8, **characterised in that** the said virtual deletion operation is followed by an operation of physical deletion of the said access right.

10. Process according to claim 9, **characterised in that** the said physical deletion operation is immediate or deferred.

11. Process according to claim 2 or 3, **characterised in that**, for an entered access right of which the status allotment variable corresponds to a deleted access right, the latter also comprises carrying out an update at the time of the first entry of this access right, to the said access right, a status variable being allotted, corresponding to a valid right and of which the action date corresponds to the entry date.

12. Process according to claim 5 or 6, **characterised in that**, for an entered access right of which the status allotment variable corresponds to a deleted access right, the latter also comprises carrying out an update at the time of the first entry of this access right, to the said access right, a status variable being allotted, corresponding to an invalidated right and of which the action date corresponds to the entry date.

**13.** Process according to claim 5 or 6, **characterised in that**, on a negative response to the said verification of the existence of a corresponding access right, the latter also comprises carrying out an update at the time of the first entry of this access right, of which the action date corresponds to an invalidation date, to the said access right, a status variable being allotted, corresponding to an invalidated right.

**14.** Access control module intended for using the process of any one of the preceding claims, this access control module being provided with a safety processor in which are entered the rights of access to the scrambled information, the safety processor being suitable for decrypting the cryptogram of the control word from the operating key and the access control module being suitable for transmitting the restored control word to the descrambling terminal in order that the information scrambled from the restored control word can be descrambled, **characterised in that** it comprises, entered in the memory of this access control module, at least one access right made up of a set of independent variables and connected variables, comprising at least, in addition to a variable of identification of the access right entered and a validity dates variable, a variable of the date of action on the access right entered and a status variable capable of taking one of three coded values, valid access right, invalidated access right and deleted access right.

**15.** Access control module according to claim 14, **characterised in that**, the said access control module being made up of a microprocessor card provided with a safety processor and a secure non-volatile programmable memory, the said at least one access right is entered in the said secure non-volatile programmable memory.

**16.** Access control module according to claim 14 or 15, **characterised in that**, for control of access to scrambled information of a pay television service, the said access rights cover the said access rights defining the modes of access to the said scrambled information and electronic purses allocated to the subscribing user holding the said access control module.

**Patentansprüche**

**1.** Verfahren zum Anmelden, Entfernen/Löschen von Zugriffsrechten auf verschlüsselte Informationen, welche von einem Sendezentrum an zumindest einen Entschlüsselungs-Terminal übertragen werden, mit dem ein mit einem Sicherheitsprozessor ausgestattetes Zugriffskontrollmodul verbunden ist, wobei diese Zugriffsrechte in dem Zugriffskontrollmodul eingetragen werden, wobei die verschlüsselten Informationen einer Zugriffskontrolle unterzogen werden durch periodisches Aussenden von Zugriffskontrollnachrichten, Trägern von Zugriffskriterien und eines Kryptogramms eines periodisch geänderten und mit Hilfe eines Betriebsschlüssels chiffrierten Kontrollwortes, sie dann im Bereich jedes Sicherheitsprozessors bedingt der Überprüfung auf den wahren Wert zumindest eines eingetragenen Zugriffsrechtes gegenüber den Zugriffskriterien unterzogen werden durch Dechiffrierung des Kryptogramms des Kontrollwortes anhand des Betriebsschlüssels, wobei dann die Übertragung des wieder hergestellten Kontrollwortes an den Entschlüsselungsterminal und die Entschlüsselung der verschlüsselten Informationen anhand des wieder hergestellten Kontrollwortes stattfinden, **dadurch gekennzeichnet, dass** das Verfahren zumindest daraus besteht:

- jedes in dem Zugriffskontrollmodul eingetragene Zugriffsrecht als eine Anordnung von unabhängigen Variablen und verbundenen Variablen auszubilden, welche zumindest außer einer Identifikationsvariablen für das Zugriffsrecht eine Variable des Zeitpunkts des Einwirkens auf das Zugriffsrecht und eine Zustandsvariable aufweist, welche einen der drei kodierten Werte annehmen kann: gültiges Zugriffsrecht, ungültig gemachtes Zugriffsrecht, gelöschtes Zugriffsrecht;
- von dem Sendezentrum zumindest eine Steuernachricht für das Zugriffsrecht an jeden Entschlüsselungsterminal und an das mit diesem letzteren verbundene Zugriffskontrollmodul zu übertragen, wobei die Nachricht zumindest außer einer Identifikationsvariablen für das eingetragene Zugriffsrecht eine Variable des Zeitpunkts des Einwirkens und eine Zustandszuordnungsvariable aufweist, d.h. einen codierten Wert, welcher einem gültigen Zugriffsrecht, einem ungültig gemachten Zugriffsrecht oder einem gelöschten Zugriffsrecht entspricht; und bei Empfang der Steuernachricht für das Zugriffsrecht im Bereich des Zugriffskontrollmoduls
- dem entsprechend der Identifikationsvariablen für das Zugriffsrecht der Steuernachricht für das Zugriffsrecht eingetragenen Zugriffsrecht das Datum des Einwirkens zuzuordnen, und
- der Zustandsvariablen des entsprechenden eingetragenen Zugriffsrechtes die Zustandszuordnungsvariable zuzuordnen, welche einem gültigen Zugriffsrecht, einem ungültig gemachten Zugriffsrecht und einem gelöschten Zugriffsrecht entspricht.

2. Verfahren gemäß Anspruch 1, **dadurch gekennzeichnet, dass** für einen Eintragungsvorgang eines bestimmten Zugriffsrechtes in ein Zugriffskontrollmodul die Variable des Zeitpunkts des Einwirkens der Steuernachricht für das Zugriffsrecht einem Eintragungsdatum entspricht und die Zustandszuordnungsvariable ein codierter Wert ist, der einem gültigen Recht entspricht, wobei der Eintragungsvorgang darin besteht, in das Zugriffskontrollmodul ein bestimmtes Zugriffsrecht einzutragen, dessen Einwirkungsdatum dasjenige des Eintragungsdatums ist, und dessen Zustandsvariable diejenige der Zustandsvariablen ist und einem gültigen Recht entspricht.

3. Verfahren gemäß Anspruch 2, **dadurch gekennzeichnet, dass** dieses vor dem eigentlichen Eintragungsvorgang des bestimmten Zugriffsrechtes außerdem darin besteht, im Bereich des Zugriffskontrollmoduls

- die Existenz eines eingetragenen Zugriffsrechtes, welches dem bestimmten Zugriffsrecht entspricht, und dessen Zustandsvariable dem codierten Wert gültiges Recht oder ungültig gemachtes Recht entspricht, im Bereich des Zugriffskontrollmoduls zu überprüfen, und bei positiver Antwort auf diese Überprüfung:
- die Eigenschaft der Nachträglichkeit der Variablen des Einwirkungsdatums, welche einem Eintragungsdatum entspricht, gegenüber dem Einwirkungsdatum des identischen Zugriffsrechtes zu überprüfen, und bei positiver Antwort auf die Überprüfung der Eigenschaft der Nachträglichkeit:
- eine Aktualisierung dieser Variablen des Einwirkungsdatums des identischen Zugriffsrechtes ausgehend von dem besagten Einwirkungsdatum, das einem Eintragungsdatum entspricht, durchzuführen,
- der Zustandsvariablen des identischen Zugriffsrechtes den codierten Wert entsprechend einem gültigen Recht zuzuordnen, was ermöglicht, das eingetragene Zugriffsrecht gültig zu machen.

4. Verfahren gemäß Anspruch 2 oder 3, **dadurch gekennzeichnet, dass** bei einer negativen Antwort auf die Überprüfung der Existenz eines identischen Zugriffsrechtes dieses außerdem darin besteht, eine Aktualisierung durch erste Eintragung dieses Zugriffsrechtes, dessen Einwirkungsdatum dem Datum der Eintragung entspricht, durchzuführen.

5. Verfahren gemäß Anspruch 1, **dadurch gekennzeichnet, dass** bei einem Vorgang des Ungültigmachens eines in einem Zugriffskontrollmodul eingetragenen Zugriffsrechtes die besagte Variable des Einwirkdatums der Steuernachricht für das Zugriffsrecht einem Datum des Ungültigmachens entspricht und die Zustandszuordnungsvariable ein codierter Wert ist, der einem ungültig gemachten Recht entspricht, wobei der Vorgang des Ungültigmachens darin besteht, der Zustandsvariablen des eingetragenen Zugriffsrechtes den codierten Wert zuzuordnen, der einem ungültig gemachten Recht entspricht, und das Einwirkdatum des eingetragenen Zugriffsrechtes anhand des Datums des Ungültigmachens zu aktualisieren.

6. Verfahren gemäß Anspruch 5, **dadurch gekennzeichnet, dass** dieses vor dem eigentlichen Vorgang des Ungültigmachens darin besteht:

- die Existenz eines eingetragenen Zugriffsrechtes, welches dem Zugriffsrecht der besagten Steuernachricht entspricht, im Bereich des Zugriffskontrollmoduls zu überprüfen;
- die Eigenschaft der Nachträglichkeit der Variablen des Einwirkungsdatums, welche einem Datum des Ungültigmachens entspricht, gegenüber der Variablen des Einwirkungsdatums des eingetragenen Zugriffsrechtes zu überprüfen.

7. Verfahren gemäß einem der vorherigen Ansprüche, **dadurch gekennzeichnet, dass** für jede Zustandszuordnungsvariable der Steuernachricht, die einem gelöschten Zugriffsrecht entspricht, und für jedes in dem Zugriffskontrollmodul eingetragene Zugriffsrecht, dessen Zustandsvariable einem gültigen Recht oder einem ungültig gemachten Recht entspricht, dieses Verfahren zumindest besteht aus:

- einer Aktualisierung des Einwirkungsdatums des eingetragenen Zugriffsrechtes;
- einer Zuordnung der Zustandszuordnungsvariablen der Steuernachricht, welche einem gelöschten Zugriffsrecht entspricht, zu der Zustandsvariablen des eingetragenen Zugriffsrechtes, wobei der Zuordnungsvorgang für das besagte eingetragene Zugriffsrecht einen virtuellen Löschvorgang bildet.

8. Verfahren gemäß Anspruch 7, **dadurch gekennzeichnet, dass** den Schritten der Aktualisierung und des virtuellen Löschens des eingetragenen Zugriffsrechtes ein Schritt der Überprüfung der Existenz eines eingetragenen Zugriffsrechtes, welches dem Zugriffsrecht der Steuernachricht entspricht, und ein Schritt der Überprüfung der Nachträglichkeit der Variablen des Einwirkungsdatums der Steuernachricht bezüglich der Variablen des Einwirkungsdatums des eingetragenen Zugriffsrechtes vorausgehen.

9. Verfahren gemäß einem der Ansprüche 7 oder 8, **dadurch gekennzeichnet, dass** dem virtuellen Löschvorgang ein physischer Löschvorgang des besagten Zugriffsrechtes folgt.

10. Verfahren gemäß Anspruch 9, **dadurch gekennzeichnet, dass** der physische Löschvorgang unmittelbar oder verzögert erfolgt.

11. Verfahren gemäß einem der Ansprüche 2 oder 3, **dadurch gekennzeichnet, dass** bei einem eingetragenen Zugriffsrecht, dessen Zustandszuordnungsvariable einem gelöschten Zugriffsrecht entspricht, dieses Verfahren außerdem darin besteht, eine Aktualisierung durch erste Eintragung dieses Zugriffsrechtes durchzuführen, wobei dem Zugriffsrecht eine Zustandsvariable zugeordnet wird, welche einem gültigen Recht entspricht, und deren Einwirkungsdatum dem Eintragungsdatum entspricht.

12. Verfahren gemäß einem der Ansprüche 5 oder 6, **dadurch gekennzeichnet, dass** bei einem eingetragenen Zugriffsrecht, dessen Zustandszuordnungsvariable einem gelöschten Zugriffsrecht entspricht, dieses Verfahren außerdem darin besteht, eine Aktualisierung durch erste Eintragung dieses Zugriffsrechtes durchzuführen, wobei dem Zugriffsrecht eine Zustandsvariable zugeordnet wird, welche einem ungültig gemachten Recht entspricht, und deren Einwirkungsdatum dem Eintragungsdatum entspricht.

13. Verfahren gemäß einem der Ansprüche 5 oder 6, **dadurch gekennzeichnet, dass** bei negativer Antwort auf die Überprüfung der Existenz eines entsprechenden Zugriffsrechtes, dieses Verfahren außerdem darin besteht, eine Aktualisierung durch erste Eintragung dieses Zugriffsrechtes durchzuführen, dessen Einwirkungsdatum einem Datum des Ungültigmachens entspricht, wobei dem Zugriffsrecht eine Zustandsvariable zugeordnet wird, welche einem ungültig gemachten Recht entspricht.

14. Zugriffskontrollmodul, das für die Umsetzung des Verfahrens gemäß irgendeinem der vorherigen Ansprüche bestimmt ist, wobei dieses Zugriffskontrollmodul mit einem Sicherheitsprozessor ausgestattet ist, in welchem die Zugriffsrechte auf die verschlüsselten Informationen eingetragen sind, wobei der Sicherheitsprozessor dazu in der Lage ist, das Kryptogramm des Kontrollwortes anhand des Betriebsschlüssels zu dechiffrieren, und wobei das Zugriffskontrollmodul dazu in der Lage ist, das wieder hergestellte Kontrollwort an den Entschlüsselungsterminal zu übertragen, damit die verschlüsselten Informationen anhand des wieder hergestellten Kontrollwortes entschlüsselt werden können, **dadurch gekennzeichnet, dass** es eingetragen in den Speicher dieses Zugriffskontrollmoduls zumindest ein Zugriffsrecht aufweist, das von einer Anordnung unabhängiger Variabler und verbundener Variabler gebildet ist, welche zumindest außer einer Identifikationsvariablen für das eingetragene Zugriffsrecht und einer Variablen von Gültigkeitsdaten eine Variable des Einwirkungsdatums auf das eingetragene Zugriffsrecht und eine Zustandsvariable aufweist, welche einen von drei codierten Werten, nämlich gültiges Zugriffsrecht, ungültig gemachtes Zugriffsrecht, gelöschtes Zugriffsrecht annehmen kann.

15. Zugriffskontrollmodul gemäß Anspruch 14, **dadurch gekennzeichnet, dass** aufgrund dessen, dass das Zugriffskontrollmodul von einer Mikroprozessorkarte gebildet ist, welche mit einem Sicherheitsprozessor und einem gesicherten nicht löschenden programmierbaren Speicher versehen ist, das zumindest eine Zugriffsrecht in dem gesicherten nicht löschenden programmierbaren Speicher eingetragen ist.

16. Zugriffskontrollmodul gemäß Anspruch 14 oder 15, **dadurch gekennzeichnet, dass** bei einer Kontrolle des Zugriffs auf verschlüsselte Informationen eines gebührenpflichtigen Fernsehservices die Zugriffsrechte die besagten Zugriffsrechte umfassen, welche die Zugangsarten zu den verschlüsselten Informationen und elektronische Zugriffsberechtigungen definieren, welche dem teilnehmenden Benutzer, der Besitzer des Zugriffskontrollmoduls ist, zugeordnet sind.

$R\_ID$ | $V\_D$ | $AD\_V$ | $S\_V$ → 0

S_V=0 invalidé
S_V=1 validé
S_V=2 effacé

**Transmission EXM** → A

$R\_ID_x$ | $V\_D_x$ | $AD\_V_x$ | $S\_V_{x(0,1,2)}$

EC
Transmission

Tk
Réception

Si $R\_ID=R\_ID_x$
alors $AD\_V=AD\_V_x$ → B

$S\_V=S\_V_x$ → C

**_FIG.1_**

Réception EXM
$\{R\_ID_x \ V\_D_x, \ AD\_V_x, \ S\_V_x = 1\}$
$\{R\_ID, \ V\_D, \ AD\_V, \ S\_V\}$

$B_{0a}$

$B_{1a}$

$\exists R\_ID = R\_ID_x$
ET
$S\_V \neq 2$

$-$

$+$

Inscription
$R\_ID = R\_IDx$

$B_{5a}$

$B_{6a}$

$V\_D = V\_Dx$

$B_{2a}$

$B_{3a}$

$AD\_V_x > AD\_V$

$-$

Fin
Inscription

$+$

Mise à jour
$AD\_V = AD\_V_x$

$B_{4a}$

Affectation
$S\_V = S\_V_x = 1$

$C$

## FIG.2a

Inscription d'un droit valide

20

Réception EXM
{$R\_ID_x$ $V\_D_x$, $AD\_V_x$, $S\_V_x = 0$}
{$R\_ID$, $V\_D$, $AD\_V$, $S\_V$}          $B_{0b}$

$B_{1b}$

$\exists R\_ID = R\_ID_x$
ET
$S\_V \neq 2$

$-$

Inscription
$R\_ID = R\_IDx$          $B_{5b}$

$B_{6b}$

$V\_D = V\_Dx$

$+$

$B_{2b}$

$AD\_V_x > AD\_V$          $-$          $B_{3b}$          Fin
Invalidation

$+$

Mise à jour
$AD\_V = AD\_V_x$          $B_{4b}$

Invalidation
$S\_V = S\_V_x = 0$          $C$

## FIG.2b

Invalidation d'un droit

Réception EXM
$\{R\_ID_x \ V\_D_x, \ AD\_V_x, \ S\_V_x = 2\}$
$\{R\_ID, \ V\_D, \ AD\_V, \ S\_V\}$ ⌐B$_{0c}$

$B_{1c}$

$\exists R\_ID = R\_ID_x$
ET
$S\_V \neq 2$

−

$B_{2c}$

Fin
Effacement

+

$B_{3c}$

$AD\_V_x > AD\_V$ −

+

Mise à jour
$AD\_V = AD\_V_x$ ⌐B$_{4c}$

Effacement virtuel
$S\_V = S\_V_x = 2$ ⌐C

## FIG.2c

Effacement virtuel d'un droit

22

**FIG.2d**

*Effacement physique*

**FIG.3a**

**FIG.3b**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **D. VAN SCHOONEVELD.** Standardization of conditional access systems for digital pay television. *Philips Journal of Research,* 1996, vol. 50, 217-225